# EUROPEAN PATENT APPLICATION

(11) **EP 2 159 894 A1**
(43) Date of publication of application: **03.03.2010**
(21) Application number: 09718953.4
(22) Date of filing: 06.03.2009
(51) Int. Cl.: H02H 5/04, B60L 3/00, H01M 2/10, H01M 10/42

(54) **POWER APPARATUS AND ELECTRONIC APPARATUS USING THE SAME**

(30) Priority: 11.03.2008 JP 2008060655
(71) Applicant: Panasonic Corporation, Kadoma-shi Osaka 571-8501 (JP)
(72) Inventor: YASUI, Shunsuke, Chuo-ku, Osaka-shi, Osaka 540-6207 (JP); HIRAKAWA, Yasushi, Chuo-ku, Osaka-shi, Osaka 540-6207 (JP)
(74) Representative: Schwabe - Sandmair - Marx
(86) International application number: PCT/JP2009/001013
(87) International publication number: WO 2009/113281

(57) **Abstract**

A power apparatus of the present invention includes a main body case, a plurality of power supply elements provided inside the main body case, and a fire-extinguishing agent tank facing each of the plurality of power supply elements. An opening part for sensing heat of the power supply elements and substantially opening the fire-extinguishing agent tank is provided between the power supply elements and the fire-extinguishing agent tank facing the power supply elements, thus enabling the size to be reduced.

## Description

### TECHNICAL FIELD

The present invention relates to a power apparatus capable of coping with abnormal circumstances of a power supply element and an electronic apparatus using the power apparatus.

### BACKGROUND ART

In electronic apparatuses such as automobiles, electric vehicles and the like, in which electric power from a power apparatus drives a drive motor used as a power source, have been developed and have received much attention from the viewpoint of energy saving.

Furthermore, the above-mentioned power apparatus is equipped with a fire-extinguishing agent which is ejected from a plurality of nozzles in the abnormal circumstances in order to enhance the safety in the abnormal circumstances such as collision (see, for example, Patent Document 1).

The problem in the conventional example of the above-mentioned Patent Document 1 is that the size of the power apparatus is increased.

That is to say, the power apparatus has a configuration in which a plurality of power supply elements are connected in series or in parallel in order to increase the electric power thereof. Therefore, when a fire-extinguishing agent is ejected to all parts of the plurality of power supply elements from a nozzle, an extremely large amount of fire-extinguishing agent is necessary, which causes to increase the size of the apparatus.

Patent document 1: Japanese Patent Unexamined Publication No. H9-74603

### SUMMARY OF THE INVENTION

A power apparatus of the present invention includes a main body case, a plurality of power supply elements provided inside the main body case, and a fire-extinguishing agent tank facing each of the plurality of power supply elements. Between the power supply elements and the fire-extinguishing agent tank facing the power supply elements, an opening part configured to sense heat of each of the power supply element and open the fire-extinguishing agent tank is provided. With such a configuration, the size of the power apparatus can be reduced.

That is to say, in the present invention, the fire-extinguishing agent tank facing each of the plurality of power supply elements is provided, and the opening part configured to sense heat of each of the power supply element and open the fire-extinguishing agent tank is provided between each of the power supply elements and the fire-extinguishing agent tank facing the power supply elements. Thus, from the fire-extinguishing agent tank in the portion corresponding to the relevant power supply element whose temperature is abnormally increased, a fire-extinguishing agent can be reliably ejected. That is to say, the amount of the fire-extinguishing agent can be reduced as compared with a conventional example in which a fire-extinguishing agent is ejected in a wide area. As a result, the size of the apparatus can be reduced.

Furthermore, an electronic apparatus of the present invention uses the above-mentioned power apparatus as an electric power supply. Thus, the size of the electronic apparatus can be reduced and the safety can be enhanced.

### BRIEF DESCRIPTION OF THE DRAWINGS

Fig. 1 is a sectional view showing a power apparatus in accordance with a first exemplary embodiment of the present invention.
Fig. 2 is a sectional view showing a power apparatus in accordance with a second exemplary embodiment of the present invention.
Fig. 3 is an enlarged sectional view of a main portion of the power apparatus in accordance with the second exemplary embodiment of the present invention.
Fig. 4 is an enlarged sectional view of a main portion to illustrate another configuration of an opening part of the power apparatus in accordance with the second exemplary embodiment of the present invention.
Fig. 5 is an enlarged sectional view of a main portion to illustrate a further configuration of an opening part of the power apparatus in accordance with the second exemplary embodiment of the present invention.
Fig. 6 is an enlarged sectional view of a main portion to illustrate yet another configuration of an opening part of the power apparatus in accordance with the second exemplary embodiment of the present invention.
Fig. 7 is a view showing a configuration of an electronic apparatus in accordance with a third exemplary embodiment of the present invention.

### REFERENCE MARKS IN THE DRAWINGS

- 1: main body case
- 2: power supply element
- 2a: cylindrical case
- 2b: positive electrode
- 3, 6: fire-extinguishing agent tank
- 3a,: 8 opening part
- 4: connecting line
- 5: fire-extinguishing agent
- 5a: pressurized air layer
- 7: fire-extinguishing part
- 9: bimetal
- 9a: operation body
- 9b: temperature detector
- 9c: heater
- 9d: valve
- 10: needle
- 11: lid
- 12: supporting plate
- 13: hole
- 23A,: 23B axle
- 24A: front wheel
- 24B: rear wheel
- 25: shaft
- 26: power transmission unit
- 27: motor
- 28: electric power supply line
- 29: power apparatus

### DETAILED DESCRIPTION OF THE PREFERRED EMBODIMENTS

Hereinafter, exemplary embodiments of the present invention are described with reference to drawings. The same reference numerals are given to the same parts. Note here that the present invention is not limited to the following contents as long as it is based on the basic features described in this description.

### FIRST EXEMPLARY EMBODIMENT

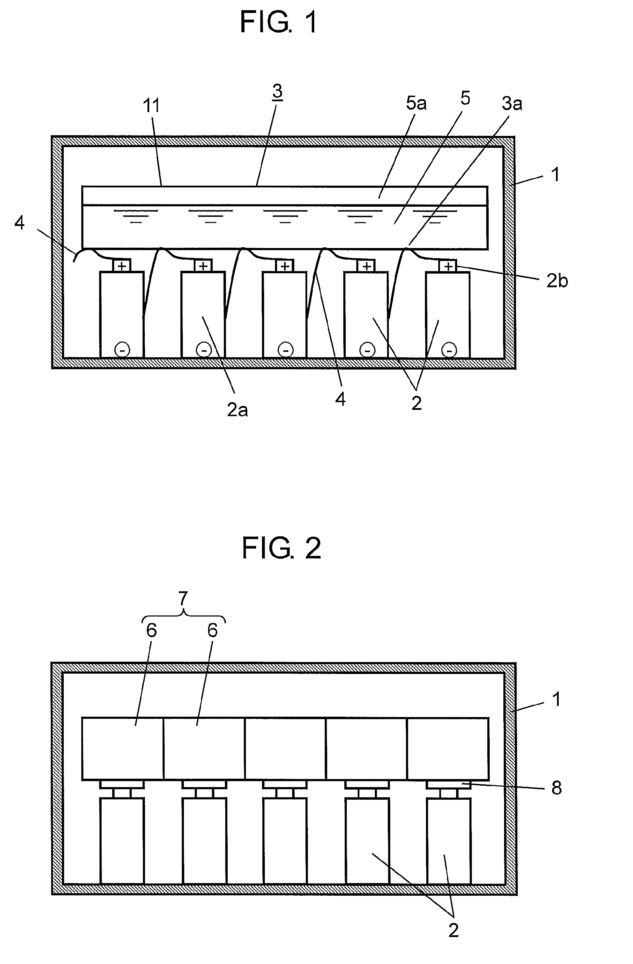

Fig. 1 is a sectional view showing a power apparatus in accordance with a first exemplary embodiment of the present invention. As shown in Fig. 1, the power apparatus includes main body case 1, a plurality of power supply elements 2 provided inside main body case 1, and horizontally long fire-extinguishing agent tanks 3 each facing each of the plurality of power supply elements 2. Herein, a specific example of the plurality of power supply elements 2 includes a battery or a capacitor. In this exemplary embodiment, batteries are described as an example of power supply elements 2.

Fire-extinguishing agent tank 3 is made of synthetic resin such as polypropylene which is softened and then melted by heat generated by the temperature rise. As shown in Fig. 1, fire-extinguishing agent tank 3 is a container having a horizontally-long hollow shape, and the inside thereof is filled with fire-extinguishing agent 5 in a pressurized state.

Note here that fire-extinguishing agent 5 is filled in a pressurized state as shown in Fig. 1 by filling fire-extinguishing agent 5 in fire-extinguishing agent tank 3 at the rate of about 90% to 95% and then forcing air to a liquid surface of fire-extinguishing agent 5. Then, fire-extinguishing agent 5 is filled in a state in which fire-extinguishing agent tank 3 is pressed outward and stretched by using an elastic property of the synthetic resin. At this time, pressurized air layer 5a is present on the liquid surface.

In this exemplary embodiment, opening part 3a for sensing heat of the corresponding power supply element 2 and opening fire-extinguishing agent tank 3 is provided between power supply elements 2 and fire-extinguishing agent tank 3 facing power supply elements 2.

Specifically, opening part 3a is configured, for example, by forming at least a bottom surface of fire-extinguishing agent tank 3 of synthetic resin such as polypropylene that is melted by heat at about 180°C, and by bringing connecting lines 4 for electrically connecting a plurality of power supply elements 2 into contact with or closer to the bottom surface of fire-extinguishing agent tank 3. Opening part 3a may be formed of synthetic resin on the entire surface of the bottom surface of fire-extinguishing agent tank 3 or in at least the vicinity which connecting line 4 is brought into contact with or closer to. Furthermore, opening part 3a may be formed by laminating polyethylene terephthalate on one surface of a metal film made of at least an aluminum layer and a resin film made of, for example, polyethylene on the other surface of the metal film.

When the temperature of power supply element 2 is abnormally increased due to occurrence of some abnormality, the bottom surface of fire-extinguishing agent tank 3 that is close to power supply element 2 is melted. Thereby, opening part 3a is opened. As a result, fire-extinguishing agent 5 is ejected intensively toward power supply element 2 whose temperature is abnormally increased. Thus, the abnormal temperature rise of power supply element 2 is stopped, and the safety can be enhanced.

Since connecting line 4, which electrically connects a plurality of power supply elements 2 to each other, is brought into contact with or closer to the bottom surface of fire-extinguishing agent tank 3, the heat of power supply element 2 whose temperature is increased can be easily conducted to fire-extinguishing agent tank 3 via connecting line 4. As a result, the fire-extinguishing agent can start to be ejected within a short time, and thus the safety can be enhanced.

This point is described in more detail. One end of connecting line 4 is electrically connected to the external surface of cylindrical case 2a serving as the negative electrode of power supply element 2 and the other end of connecting line 4 is connected to positive electrode 2b.

Therefore, connecting line 4 made of metal and having a high thermal conductivity can securely conduct heat of the abnormally increased temperature from positive electrode 2b and cylindrical case 2a to fire-extinguishing agent tank 3. Consequently, fire-extinguishing agent tank 3 is melted so as to provide a hole. Thus, fire-extinguishing agent 5 is ejected to power supply element 2 whose temperature is abnormally increased.

Furthermore, since fire-extinguishing agent 5 is forced into fire-extinguishing agent tank 3 as mentioned above in a pressurized state, fire-extinguishing agent 5 is ejected vigorously toward power supply element 2 whose temperature is abnormally increased.

### SECOND EXEMPLARY EMBODIMENT

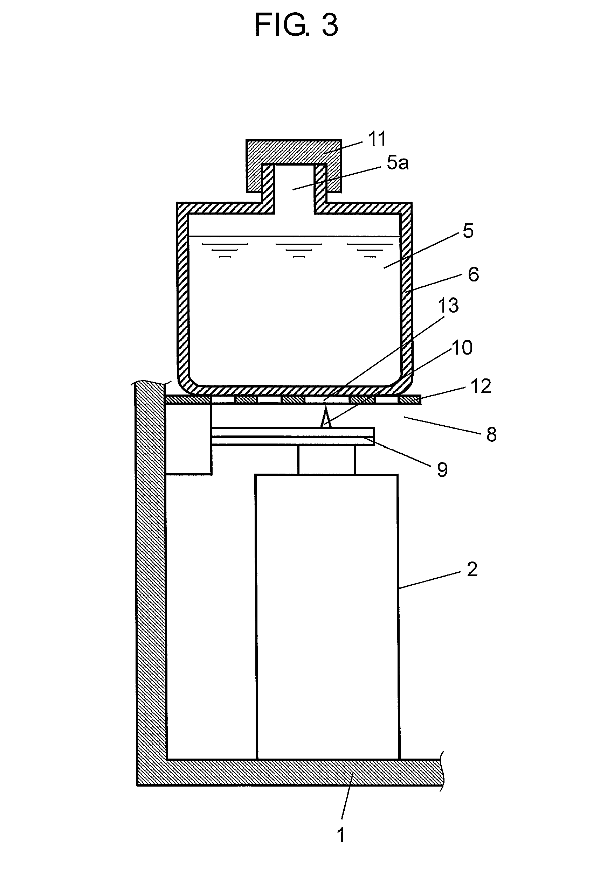

Hereinafter, a power apparatus in accordance with a second exemplary embodiment of the present invention is described in detail with reference to Figs. 2 and 3.

Fig. 2 is a sectional view showing an electronic apparatus in accordance with the second exemplary embodiment of the present invention. Fig. 3 is an enlarged sectional view of a main portion of the electronic apparatus in accordance with the second exemplary embodiment of the present invention.

As shown in Fig. 2, the power apparatus of this exemplary embodiment includes main body case 1, a plurality of power supply elements (for example, batteries or capacitors) 2 provided inside main body case 1, and fire-extinguishing part 7 having fire-extinguishing agent tanks 6 each facing respective power supply element 2.

As shown in Fig. 3, fire-extinguishing part 7 includes independent fire-extinguishing agent tanks 6 facing the upper part of each of power supply elements 2. In this configuration, fire-extinguishing agent tanks 6 are individually independent from each other as shown in Fig. 2. However, fire-extinguishing part 7 as a whole is integrated into one unit in a horizontal direction.

Between each power supply element 2 and respective fire-extinguishing agent tank 6 facing power supply element 2, as shown in Fig. 3, opening parts 8 each configured to sense the heat of corresponding power supply element 2 and open corresponding fire-extinguishing agent tank 6 are provided.

As shown in Fig. 3, each of opening parts 8 includes bimetal 9 one end of which is fixed on main body case 1 and needle 10 fixed on the upper surface of bimetal 9 facing fire-extinguishing agent tank 6.

Each of bimetals 9 is provided so that the lower surface side (the side stretches largely by the temperature rise) is brought into contact with the upper surface of power supply element 2. When the temperature of the corresponding power supply element 2 is abnormally increased, bimetal 9 is, for example, thermally deformed in such a manner in which it stretches largely upwardly. As a result, needle 10 ruptures and opens the bottom of fire-extinguishing agent tank 3.

Fire-extinguishing agent tank 6 is described in more detail. Fire-extinguishing agent tank 6 is made of rubber and the inside thereof is filled with fire-extinguishing agent 5 in a pressurized state as shown in Fig. 3. Furthermore, on the liquid surface thereof, pressurized air layer 5a is present.

Furthermore, since the bottom of fire-extinguishing agent tank 6 is made to be thin, this bottom is largely ruptured and opened when the temperature of the corresponding power supply element 2 mentioned above is increased and needle 10 sticks the bottom of fire-extinguishing agent tank 6. As a result, fire-extinguishing agent 5 is vigorously ejected to the corresponding power supply element 2. Thus, the safety is enhanced.

Fire-extinguishing agent tank 6 shown in Fig. 3 is filled with fire-extinguishing agent 5 and air in a pressurized state and then air-tightly closed with lid 11 provided to a hole provided on the upper surface.

Furthermore, supporting plate 12 supporting the bottom of fire-extinguishing agent tank 6 as shown in Fig. 3 has hole 13 in a route through which needle 10 passes upwardly.

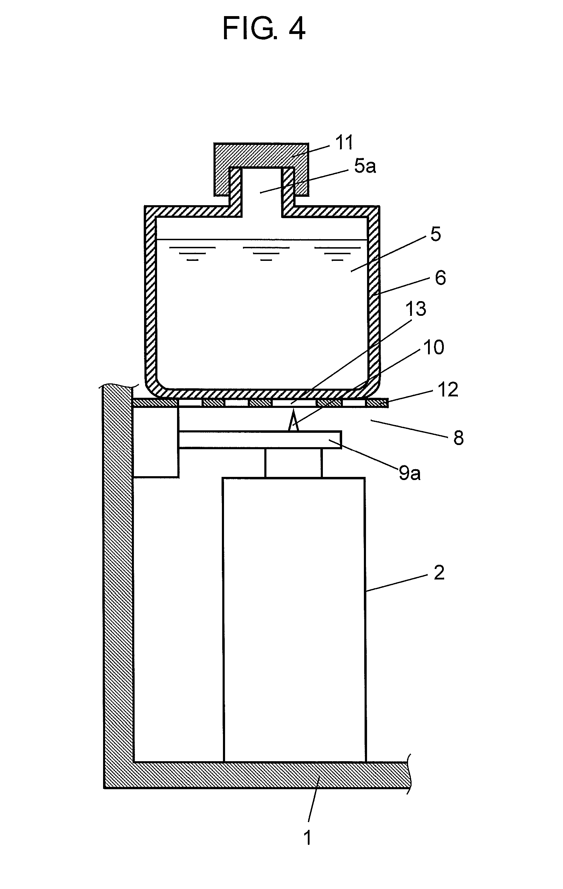

This exemplary embodiment describes an example of a configuration in which opening part 8 includes bimetal 9 and needle 10 fixed on the upper surface of bimetal 9. The configuration is not limited to this example. For example, as a configuration of opening part 8, configurations shown in the following Figs. 4 to 6 may be used.

Figs. 4 to 6 are enlarged sectional views of a main portion to illustrate other configurations of an opening part of a power apparatus in accordance with the second exemplary embodiment of the present invention.

In Fig. 4, opening part 8 includes operation body 9a made of a shape memory alloy and needle 10 fixed on the operation body.

That is to say, instead of bimetal 9 in accordance with the exemplary embodiments shown in Figs. 2 and 3, operation body 9a made of a shape memory alloy is provided. When the temperature of the corresponding power supply element 2 is abnormally increased, operation body 9a returns to a shape memory state so as to allow needle 10 fixed on the upper surface that faces fire-extinguishing agent tank 6 to stick the bottom of fire-extinguishing agent tank 6. Thereby, the bottom is largely ruptured and opened.

As a result, fire-extinguishing agent 5 is vigorously ejected to the corresponding power supply element 2. Thus, the safety is enhanced.

The shape memory state of operation body 9a is a state in which operation body 9a warps to the side of the fire-extinguishing agent tank at a predetermined temperature of, for example, 150 to 200°C. That is, a state in which operation body 9a is deformed into a flat shape at a normal temperature as shown in Fig. 4 becomes a state in which operation body 9a warps at a predetermined temperature.

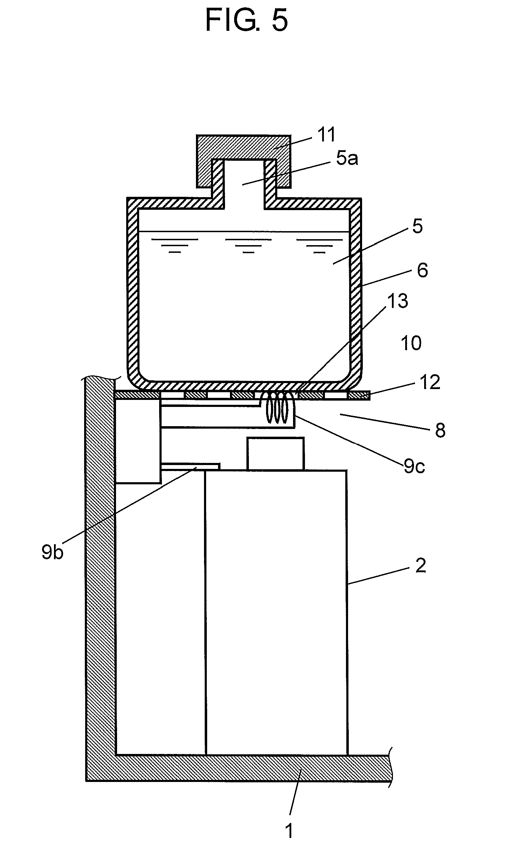

In Fig. 5, opening part 8 includes temperature detector 9b such as a thermistor, and heater 9c energized based on a temperature detected by temperature detector 9b.

That is to say, instead of bimetal 9 in accordance with the exemplary embodiments of Figs. 2 and 3, temperature detector 9b and heater 9c are provided. When a control part (not shown) detects an abnormal temperature rise of the corresponding power supply element 2 by temperature detector 9b, the control part energizes heater 9c. Thus, the bottom of fire-extinguishing agent tank 6 that is brought into contact with heater 9c is largely ruptured and opened by heat of the heater.

As a result, fire-extinguishing agent 5 is vigorously ejected to the corresponding power supply element 2. Therefore, the safety is enhanced. In Fig. 5, an example in which heater 9c is disposed in contact with the bottom surface of the fire-extinguishing agent tank is described. However, heater 9c may be disposed close to the bottom surface.

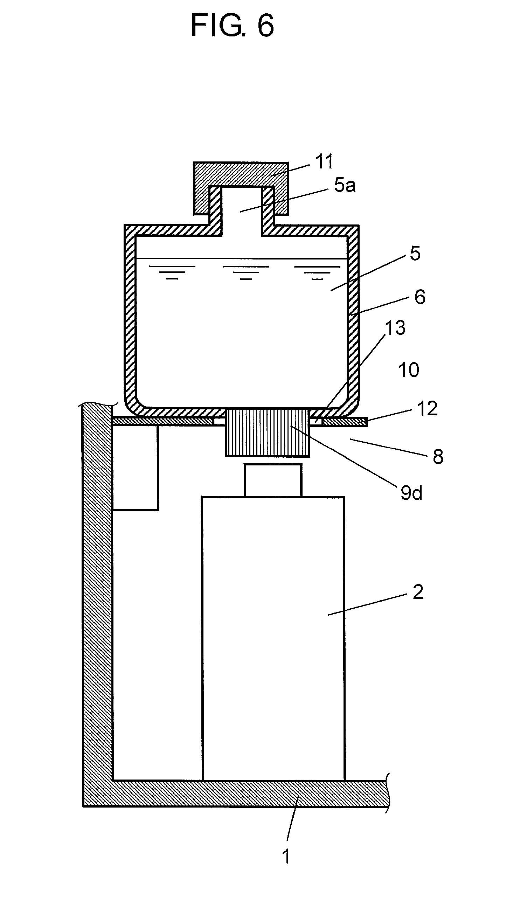

In Fig. 6, opening part 8 includes valve 9d that opens fire-extinguishing agent tank 6 by a detected temperature.

That is to say, instead of bimetal 9 in accordance with the exemplary embodiments of Figs. 2 and 3, valve 9d opening by the detected temperature is provided. When the temperature of the corresponding power supply element 2 is abnormally increased, valve 9d is opened, so that fire-extinguishing agent 5 is ejected vigorously to the corresponding power supply element 2. Thus, the safety is enhanced. Furthermore, a temperature detector, a control part, or the like, may be omitted.

Note here that the above-mentioned example describes an example in which a valve itself like a fire extinguishing sprinkler is melted at the detected temperature and opened. However, the configuration is not limited to this example. For example, a configuration in which a valve is opened by using an electromagnetic force based on a temperature detected a temperature detector via a control part may be employed. Thus, a power apparatus having a high control property can be realized.

Note here that a configuration of the opening part of this exemplary embodiment can be applied to the power apparatus of the first exemplary embodiment. Thus, the configuration of the fire-extinguishing agent tank can be simplified.

### THIRD EXEMPLARY EMBODIMENT

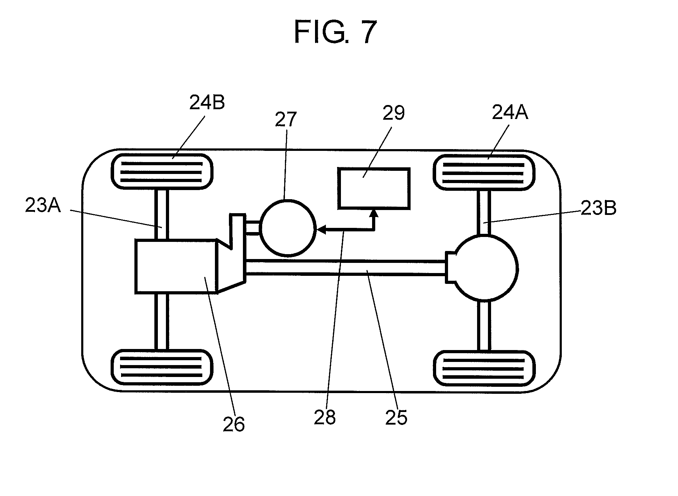

Hereinafter, an electronic apparatus in accordance with a third exemplary embodiment of the present invention is described in detail with reference to Fig. 7.

Fig. 7 is a view showing a configuration of an electronic apparatus in accordance with the third exemplary embodiment of the present invention. As shown in Fig. 7, the power apparatus in accordance with the first or second exemplary embodiment is used as a power supply of an electronic apparatus such as an electric vehicle. Since the configuration and effect of the power apparatus are the same as those in the first or second exemplary embodiment, the description thereof is omitted.

As shown in Fig. 7, the electronic apparatus in accordance with this exemplary embodiment includes front wheels 24A and rear wheels 24B coupled to axles 23A and 23B, respectively, shaft 25 for linking front wheels 24A and rear wheels 24B to each other, power transmission unit 26 provided on front wheels 24A or rear wheels 24B, motor 27 for driving power transmission unit 26, and power apparatus 29 for rotating a motor via electric power supply line 28. At this time, the power apparatus is configured by connecting power supply elements 2 in series or in parallel according to a necessary predetermined voltage or electric capacity.

According to this exemplary embodiment, even if a built-in power apparatus is in an abnormal state, the safety of the electronic apparatus can be secured by ejecting a fire-extinguishing agent to a power supply element.

This exemplary embodiment describes an electric vehicle as an example of the electronic apparatus. However, the electronic apparatus is not necessarily limited to this example. For example, a power apparatus may be used for an electronic apparatus such as a floor-mounted type fuel cell system or a solar photovoltaic power generating system as a backup power source or a battery pack for storing generated surplus electricity.

### INDUSTRIAL APPLICABILITY

A power apparatus and an electronic apparatus using the same in accordance with the present invention are useful in a technical field of, for example, automobiles and emergency power equipment.

## Claims

1. A power apparatus comprising:
a main body case;
a plurality of power supply elements provided inside the main body case;
a fire-extinguishing agent tank facing each of the plurality of power supply elements; and
an opening part configured to sense heat of the power supply elements and open the fire-extinguishing agent tank between the power supply elements and the fire-extinguishing agent tank facing the power supply elements.

2. The power apparatus according to claim 1,
wherein the opening part is configured by forming a bottom surface of the fire-extinguishing agent tank of synthetic resin.

3. The power apparatus according to claim 1,
wherein the opening part is configured by forming a bottom surface of the fire-extinguishing agent tank of the synthetic resin, and by bringing a connecting line, which electrically connects between the plurality of power supply elements, into contact with or close to the bottom of the fire-extinguishing agent tank.

4. The power apparatus according to claim 1,
wherein the opening part includes bimetal, and a needle fixed on the bimetal and configured to rupture a bottom of the fire-extinguishing agent tank by thermal deformation of the bimetal.

5. The power apparatus according to claim 1,
wherein the opening part includes an operation body made of a shape memory alloy, and a needle fixed on the operation body and configured to rupture a bottom of the fire-extinguishing agent tank by thermal deformation of the bimetal.

6. The power apparatus according to claim 1,
wherein the opening part includes a temperature detector and a heater energized based on a temperature detected by the temperature detector.

7. The power apparatus according to claim 1,
wherein the opening part includes a valve configured to open the fire-extinguishing agent tank based on a detected temperature.

8. The power apparatus according to claim 1,
wherein a fire-extinguishing agent is filled in the fire-extinguishing agent tank in a pressurized state.

9. The power apparatus according to claim 1,
wherein the fire-extinguishing agent tank is one of a plurality of fire-extinguishing agent tanks, and each of the plurality of fire-extinguishing agent tanks is disposed facing each of the power supply elements.

10. An electronic apparatus comprising a power apparatus according to claim 1, which is used as a power supply.
